# EUROPEAN PATENT SPECIFICATION

(11) **EP 0 530 904 B1**
(45) Date of publication and mention of the grant of the patent: **05.03.1997**
(21) Application number: 92202613.3
(22) Date of filing: 27.08.1992
(51) Int. Cl.: C08L 73/00, C08G 67/02

(54) **A composition comprising a polymer of carbon monoxide and ethylenically unsaturated compounds**
Zusammensetzung aus einem Polymer aus Kohlenmonoxid und ethylenisch ungesättigten Verbindungen
Composition comprenant un polymère de monoxyde de carbone et des composés éthyléniquement insaturés

(30) Priority: 30.08.1991 US 752385; 27.09.1991 US 766251
(43) Date of publication of application: 10.03.1993
(73) Proprietor: SHELL INTERNATIONALE RESEARCH MAATSCHAPPIJ B.V., 2596 HR Den Haag (NL)
(72) Inventor: Machado, Joseph Michael, Destrehan, LA 70047-9726 (US); Westbrook, Paul Alfred, Houston, Texas 77083 (US)

(56) References cited:
- FR-A- 2 149 932
- US-A- 4 157 428

## Description

This invention relates to a composition comprising a blend of a linear alternating polymer of carbon monoxide with ethylenically unsaturated compound(s).

The class of polymers of carbon monoxide with olefins has been known for some time. More recently, the class of linear alternating polymers of carbon monoxide with at least one ethylenically unsaturated compound, now becoming known as polyketones or polyketone polymers, has become of greater interest. For example US-A-4,880,903 disclosed a linear alternating polyketone terpolymer of carbon monoxide, ethylene, and other olefinically unsaturated hydrocarbons, such as propylene.

The polyketone polymers possess an attractive set of properties for a variety of applications. The utility of these polymers can be further broadened by selectively blending the polyketone polymers with other materials which have complimentary property sets. Most often this is accomplished with polymer blends which are immiscible (heterogeneous) on the molecular scale, yet well dispersed (compatible) on the macroscopic scale.

Immiscible, though compatible, blends are the most common polymer mixtures. However, on rare occasions, polymer pairs will form miscible blends. The terms "miscible" and "molecularly miscible" will be used hereinafter to describe a mixture of two or more polymers that form a single-phase solution (solid or liquid) on a molecular scale within the amorphous phase. When one or both of the polymer blend components is capable of forming both a crystalline and an amorphous phase, then the term "miscible" refers only to the amorphous phase in which the separate components are capable of mixing on the molecular level. Molecularly miscible blends can be mixed such that they exhibit only one glass transition temperature, indicating a single amorphous phase. More specifically, molecularly miscible blends exhibit one glass transition temperature as measured by thermal analysis, using a differential scanning calorimeter, or by dynamic mechanical analysis.

As miscible blends have different performance characteristics compared with immiscible blends, it is an object of this invention to provide a miscible blend of a polyketone polymer and a second polymer.

It has now surprisingly been found that the desired molecularly miscible blends can be obtained by blending together a mixture of a polyketone polymer with a phenol-based novolac polymer wherein the phenol groups may be substituted with an alkyl group having up to 8 carbon atoms. This finding provides an advantage of suppressing the melting point of the polyketone polymer, thereby broadening its processing window, by the incorporation of the phenol-based novolac polymer into the polyketone polymer. It is even more surprising that, in comparison with the polyketones, such blends exhibit better water barrier properties, i.e. they provide a reduced rate of water transport when used as a barrier material.

The present invention therefore relates to a composition comprising a blend of a linear alternating polymer of carbon monoxide with at least one ethylenically unsaturated compound and a phenol-based novolac polymer of which the phenyl groups are optionally substituted with an alkyl group having up to 8 carbon atoms, preferably up to 6 carbon atoms, which novolac polymer is present in an amount within the range of from 1 to 30 weight percent, based on the weight of the blend.

It is known from US-A-4,812,522 that polyketone polymers and poly(vinylphenol) form miscible blends. Poly(vinylphenol) shows some structural resemblance with the phenol-based novolac polymers. It is nevertheless unexpected that the phenol-based novolac polymers also form miscible blends with the polyketone polymers because polymer blend miscibility applies only to very specific polymer pairs and subtle changes in the structure of either polymer can easily lead to immiscibility.

In FR-A-2 149 932 it has been described that a polyketone containing by weight 40-80% ethylene, 3-30% carbon monoxide and 5-60% of one or more termonomers, can form blends with various organic polymers such as polyvinylchloride and phenolic resins.

A prudent strategy for improving the barrier properties of a given polymer is to blend that polymer with another polymer which possesses superior barrier properties. The novolac polymers of the present invention are strongly hydrophilic materials, and would thus not be expected to improve the water barrier characteristics of polyketone polymers. The improvement which is observed is therefore also highly unexpected.

The polyketone polymers of the blends of the invention are of a linear alternating structure and contain substantially one molecule of carbon monoxide for each molecule of unsaturated compound. The ethylenically unsaturated compound is preferably a hydrocarbon. Suitable ethylenically unsaturated hydrocarbons for use as precursors of the polyketone polymers have up to 20 carbon atoms inclusive, preferably up to 10 carbon atoms, and are aliphatic such as ethylene and other α-olefins including propylene, 1-butene, isobutylene, 1-hexene, 1-octene and 1-dodecene, or are arylaliphatic containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene. The preferred polyketone polymers are copolymers of carbon monoxide and ethylene or terpolymers of carbon monoxide, ethylene and a second ethylenically unsaturated hydrocarbon of at least 3 carbon atoms, particularly an α-olefin such as propylene.

When the preferred polyketone terpolymers are employed as a component of the blends of the invention, there will be within the terpolymer at least 2 units incorporating a moiety of ethylene for each unit incorporating a moiety of the second hydrocarbon. Preferably, there will be from 10 units to 100 units incorporating a moiety of ethylene for each unit incorporating a moiety of the second hydrocarbon. The polymer chain of the preferred polyketone terpolymers is therefore represented by the repeating formula 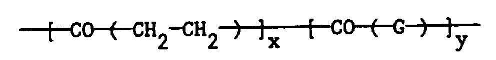 wherein G is the moiety of ethylenically unsaturated hydrocarbon of at least 3 carbon atoms polymerized through the ethylenic unsaturation and the ratio of y:x is less than 0.5.

The -CO(̵CH₂CH₂)̵ units and the -CO(̵G)̵ units are found randomly throughout the polymer chain, and preferred ratios of y:x are from 0.01 to 0.1. When copolymers of carbon monoxide and ethylene are employed in the blends of the invention, there will be no second hydrocarbon present and the copolymers are represented by the above formula wherein y is zero. The end groups of the polymer chain will depend upon the materials present during the production of the polymer and whether or how the polymer was purified. The precise nature of the end groups does not appear to influence the properties of the polymer to any considerable extent so that the preference polyketone polymers are fairly represented by the formula for the polymer chain as depicted above.

Of particular interest are the polyketone polymers which have a melting point of from 175°C to 300°C, more typically from 210°C to 270°C. The polymers have eligibly a limiting viscosity number (LVN), measured in m-cresol at 60°C in a standard capillary viscosity measuring device, from 0.5 dl/g to 10 dl/g, preferably from 0.8 dl/g to 4 dl/g.

A preferred method for the production of the polyketone polymers is disclosed in US-A-4,843,144. Carbon monoxide and hydrocarbon monomer(s) are contacted under polymerization conditions in the presence of a catalyst composition formed from a compound of palladium, the anion of a non-hydrohalogenic acid having a pKa (measured in water at 18°C) of below about 6, preferably below 2, and a bidentate ligand of phosphorus. A preferred palladium compound is a palladium carboxylate, particularly palladium acetate, a preferred anion is the anion of trifluoroacetic acid or p-toluenesulfonic acid and a preferred bidentate ligand of phosphorus is 1,3-bis(diphenylphosphino)propane or 1,3-bis[bis(2-methoxyphenyl)phosphino]propane.

The polymerization to produce the polyketone polymer is typically conducted in an inert reaction diluent, preferably an alkanolic diluent, and methanol is particularly preferred. Typical polymerization conditions include a reaction temperature from 20°C to 150°C, preferably from 50°C to 135°C. The reaction pressure is suitably from 1 atmosphere to 200 atmospheres and pressures from 10x10⁵ Pa to 100x10⁵ Pa (10 atmospheres to 100 atmospheres) are preferred. The polyketone polymer is typically obtained as a product substantially insoluble in the reaction diluent and the product is recovered by conventional methods such as filtration or decantation. The polyketone polymer is suitably used as recovered or the polymer may be purified by contact with a solvent or extraction agent which is selective for catalyst residues.

The second component of the blends of the inventions are phenolic-based novolac polymers, which are well known in the art. They are are produced when a less-than-stochiometric amount of formaldehyde is reacted with phenol in an acidic solution to form a solid product that cannot react to completion without additional formaldehyde. The novolac polymers so formed are thermoplastic polymers. Additional information on phenolic-based novolac polymers, can be obtained from the following references: Textbook of Polymer Science (3ed) by Fred W. Billmeyer, Jr., Pages 436-440; and Modern Plastic Encyclopedia, 1988 (ed) Pages 114-116.

These novolac polymers are exemplified by polymers of phenol-formaldehyde, cresol-formaldehyde, resorcinol-formaldehyde, p-butylphenol-formaldehyde, p-ethylphenol-formaldehyde, p-hexylphenol-formaldehyde, p-propylphenol-formaldehyde, p-pentylphenol-formaldehyde, p-octylphenol-formaldehyde and p-heptylphenol-formaldehyde. These various novolac polymers differ in their substituents, melting points, viscosities, and other properties. Table A details some novolac polymers and their properties, having a repeating unit represented by the general formula:

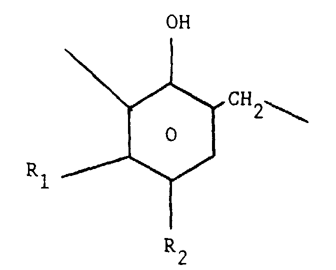

**Table A**

| Novolac polymers | | | |
|---|---|---|---|
| Designation | Description ¹⁾²⁾ | R₁ | R₂ |
| (A) | phenol-formaldehyde novolac viscosity 4000 mPa.s melting point 110 °C | -H | -H |
| (B) | phenol-formaldehyde novolac viscosity 1100 mPa.s melting point 84 °C | -H | -H |
| (C) | resorcinol-formaldehyde novolac melting point 105 °C | -OH | -H |
| (D) | cresol-formaldehyde novolac melting point 190 °C | -CH₃ | -H |
| (E) | p-butylphenol-formaldehyde novolac melting point 116 °C | -H | (̵CH₂)₃CH₃ |
| (F) | p-nonylphenol-formaldehyde novolac melting point 93 °C | -H | (̵CH₂)₈CH₃ |
| (G) | phenol-formaldehyde novolac | -H | -H |

| | | | |
|---|---|---|---|
| 1) Viscosity of novolacs, cone and plate, as determined by ASTM D-4287-83 | | | |
| 2) Melting point of novolacs were determined by ASTM E-2867 | | | |

The blends of the invention contain the novolac polymer in an amount within the range of from 1 to 30 %w, more preferably from 1 to 10 %w.

The blends of the invention may also include additives such as antioxidants and stabilizers, dyes, fillers or reinforcing agents, fire resistant materials, mould release agents, colorants and other materials designed to improve the processability of the polymers or the properties of the resulting blend. Such additives are added prior to, together with or subsequent to the blending of the polyketone and the copolymer.

The method of producing the blends of the invention is not material. Preferably the blends are produced without undue degradation of the blend or its components. In one modification the polymer components of the blend are extruded in a corotating twin screw extruder to produce the blend. In another modification, the polymer components are blended in a mixing device which exhibits high shear. The blends are processed by methods such as extrusion and injection moulding into sheets, films, plates and shaped articles. Illustrative applications are the production of both internal and external parts for the automotive industry and structural parts for the construction industry, and in particular the production of articles useful in both rigid and flexible packaging.

The invention is further illustrated by the following Examples which should not be regarded as limiting.

### Example 1 - Preparation of polyketone polymer

A terpolymer of carbon monoxide, ethylene and propylene was prepared in the presence of a catalyst composition formed from palladium acetate, trifluoracetic acid and 1,3-bis[bis(2-methoxyphenyl)phosphino]propane. The terpolymer had a melting point of 220 °C and an LVN, measured in m-cresol at 60 °C, of 1.8 dl/g.

### Example 2 - Preparation of polyketone/phenolic novolac blends

Prior to compounding, pellets of the polyketone polymer of Example 1 and flakes of novolac polymer (A) (Table A) were dried separately under vacuum at 50 °C for 16 hours. Blends were prepared by combining the desired ratio of the polymers and tumble blended for several minutes. The mixture was then added to a 30mm co-rotating twin screw extruder operating at 250 °C and 200 rpm. The extrudate strand was passed through a water bath and through a pelletizer. The pellets obtained were dried and fed into an injection moulding machine operating at a melt temperature of 250 °C to produce moulded ASTM specimens. The specimens were stored over desiccant prior to testing. For comparison, samples of the unblended polymers were processed by the same procedures. Differential scanning calorimetry (DSC) and dynamic mechanical analysis were performed on the moulded specimens. The results are shown in Table 1.

**Table 1**

| Differential scanning calorimetry and dynamic mechanical analysis results for polyketone (PK)/phenolic novolac (NOV) blends | | | | | |
|---|---|---|---|---|---|
| 1 Composition (PK/NOV w/w) | 2 Tm (°C) | 3 Hm (J/g) | 4 Crystallinity (PK) (%) | 5 Tg (DSC) (°C) | 6 Tg (DMA) (°C) |
| 100/0^{a)} | 219.0 | 83.7 | 36.8 | 17 | 18 |
| 98/2 | 219.5 | 85.4 | 38.3 | 18 | 22 |
| 90/10 | 217.4 | 78.1 | 38.2 | 30 | 40 |
| 80/20 | 213.6 | 73.0 | 40.9 | 37 | 41 |
| 70/30 | 208.0 | 59.8 | 37.6 | 49 | 50 |
| 50/50^{a)} | 195.4 | 33.8 | 29.7 | 48 | 53 |
| 50/50^{a)} | - | - | - | 61 | 59 |
| 0/100^{a)} | - | - | - | 74 | -- |

| | | | | | |
|---|---|---|---|---|---|
| ^{a)} for comparison | | | | | |

Table 1 shows the thermal properties of polyketone/novolac blends containing various amount of a phenol-based novolac (A). Column 2 shows that as novolac is added to the blend, the melting point (Tm) of the polyketone component decreases in a continuous manner. This is evidence of miscibility in the melt and in the amorphous phase of the blend upon solidification.

Column 3 shows the measured enthalpy of melting (Hm) which is proportional to the total crystallinity of the blend. This decreases as novolac polymer is added, which is expected since the novolac polymer does not crystallize. It is significant that no melting, and therefore no crystallinity, was detected for the blend containing 30% polyketone. Suppression of polyketone crystallization in the novolac-rich regime is further evidence of miscibility in the melt. In column 4, the data in column 3 is normalized with respect to the content of polyketone and the known heat of fusion of polyketone crystals to give the degree of crystallinity of the polyketone component. It is important to note that the degree of crystallinity developed by the polyketone component is fully maintained in the polyketone-rich regime. A substantial degree of crystallinity is maintained up to 50% novolac in the blend.

Column 5 shows that the glass transition temperature, measured by DSC at a heating rate of 20 °C/min, increases in proportion to the novolac polymer content of the blend. This is the primary attribute of a miscible polymer blend. A higher glass transition temperature produces a stiffer, usually stronger, material with better resistance to creep and less thermal expansion and mould shrinkage. Column 6 verifies the results in Column 5. This gives the Tg measured by dynamic mechanical analysis performed in oscillatory torsion at a frequency of 1 rad/sec. The glass transition temperature corresponds to the peak of the loss tangent-versus-temperature curve.

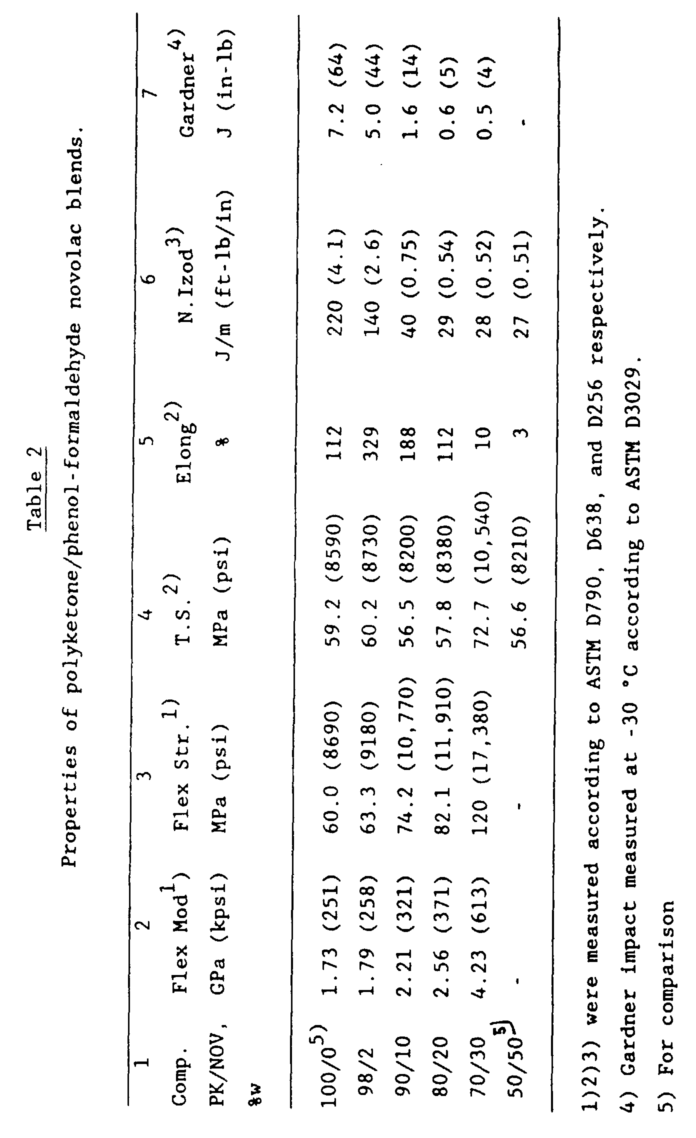

Table 2 shows the mechanical properties of the polyketone/phenol-based novolac (A) blends at various compositions. Columns 2 and 3 show that the novolac polymers serve to increase the flexural modulus (Flex. Mod.) and flexural strength (Flex. Str.) of polyketone in proportion to its concentration in the blend. The tensile strength (T.S.) shown in Column 4 is not strongly affected, although it is improved substantially in the case of the blend containing 30% novolac. Column 5 shows that a high degree of tensile elongation (Elong.), i.e. ductility, is maintained up to 20% added novolac. Notched Izod (N. Izod) and Gardner impact strength (Column 6 and 7) are reduced as novolac polymer is added to the blend which must be expected when the glass transition temperature is raised.

### Example 3

### Preparation of polyketone-substituted novolac blends

Blends of the polyketone polymer of Example 1 and a series of novolac polymers derived from substituted phenols, which are described in Table A, were prepared according to the procedure outlined in Example 2. Each of these novolac polymers were blended with polyketone at a concentration of 20 wt%. The thermal properties of the resultant blends are given in Table 3. Mechanical properties of these blends are given in Table 4.

**Table 3**

| Differential scanning calorimetry and dynamic mechanical analysis results for blends between polyketone and substituted novolac polymers | | | | | | |
|---|---|---|---|---|---|---|
| 1 Composition PK/NOV, %w | 2 Novolac Type | | 3 Tm °C | 4 Crystallinity % | 5 Tg(DSC) °C | 6 Tg (DMA) °C |
| 100/0 | ^{a)} | - | 219.0 | 36.8 | 17 | 18 |
| 80/20 | (A)^{b)} | Phenol | 213.6 | 40.9 | 37 | 41 |
| 80/20 | (B) | Phenol | 213.3 | 41.2 | 30 | 32 |
| 80/20 | (C) | Resorcinol | 216.7 | 41.6 | 44 | 36 |
| 80/20 | (D) | m-Cresol | 210.0 | 39.5 | 44 | 57 |
| 80/20 | (E) | p-butyl | 219.0 | 38.0 | -- | 46 |
| 80/20 | (F)^{a)} | p-nonyl | 220.0 | 40 | -- | 22 and 56 |

| | | | | | | |
|---|---|---|---|---|---|---|
| ^{a)} For comparison | | | | | | |
| ^{b)} Alphabetical designations of novolacs correspond to those of Table A. | | | | | | |

The data shows that polyketone blends containing novolac polymers which were derived from phenol, cresol, and resorcinol exhibit higher glass transition temperatures and suppressed melting points in comparison to the neat polyketone. This indicates miscibility. For the butylphenol based novolac blend, an increased glass transition temperature is observed indicating miscibility. For a nonylphenol based novolac blend, two separate glass transition temperatures are observed and no melting point depression occurs indicating immiscibility.

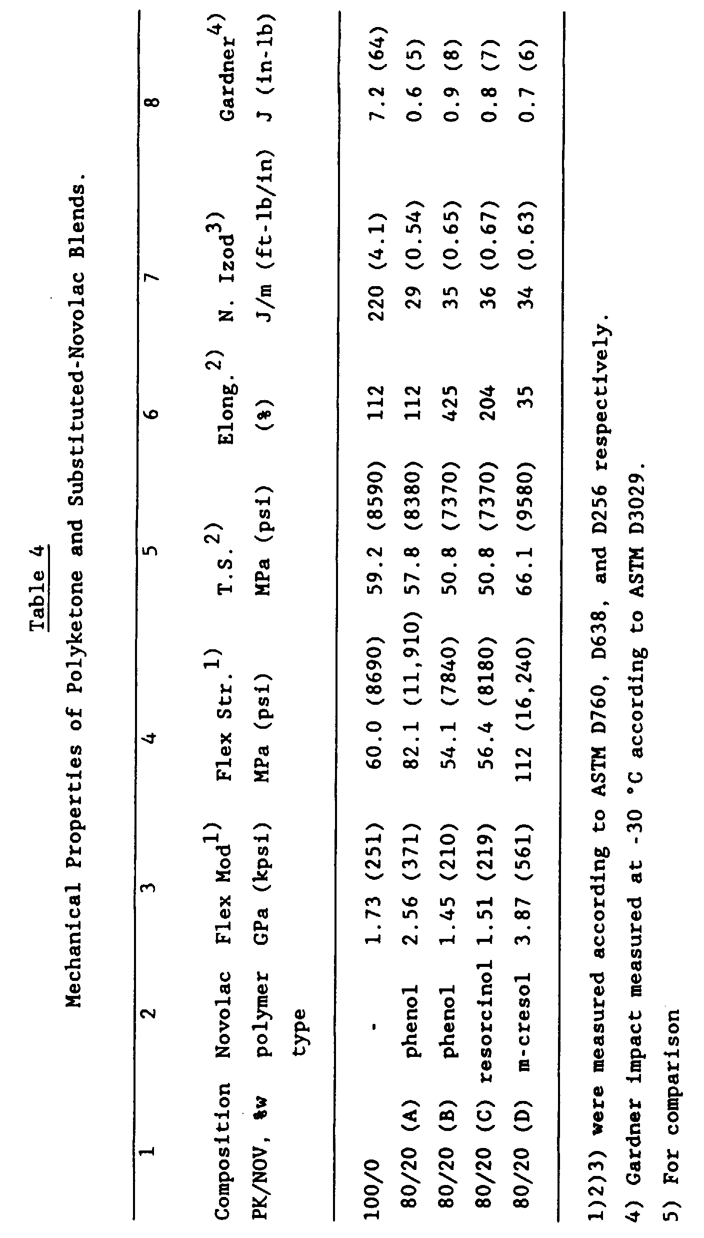

Table 4 lists the mechanical properties of polyketone blends containing 20 wt% of substituted novolac materials. The higher molecular weight phenolic novolac (A) exhibited improved flexural stiffness and strength relative to the polyketone control. The lower molecular weight phenolic novolac (B) provided excellent ductility as measured by elongation to break. The m-cresol-based novolac (D) provided a 100% improvement in both flexural modulus and flexural strength and a modest (10%) improvement in tensile strength relative to the properties of the unblended polyketone. This blend also possessed the highest glass transition temperature among the variety of novolacs which were tested.

### Example 4

Blends were prepared using a polyketone polymer (melting point 220 °C; LVN 1.1 dl/g, measured in m-cresol at 60 °C) and three novolac polymers (A), (E) and (F), cf. Table A. The blending was performed as described in Example 2. The compounded blends were injection moulded into 0.22 l (7.5 oz.) cups using a 100-ton injection moulding machine. The cups possessed an average wall thickness of 0.69 mm (0. 027") and a surface area for permeation of 0.0183 m² (28.3 in²). For comparison, samples of the unblended polyketone were processed using the same procedures.

The cups were filled with water, double-sealed with an aluminium lid, maintained in a 50% relative humidity environment, and weighed periodically to determine water loss over time. Some of the samples were also subjected to a retort (sterilization) cycle in a benchtop sterilization unit at 2.05 bar (15 psig). The retort temperature was increased until the internal temperature reached 127 °C (260°F), at which point the container was slowly cooled to 66 °C (150°F). The total cycle required about three hours. The water vapour transmission rate (WVTR) for the containers are shown in Table 5. The transmission rate is expressed in terms of the rate at which the containers lose weight through water transport in units of percent weight loss per year.

**Table 5**

| WVTR reduction of polyketone polymer/novolac blends. | | | | |
|---|---|---|---|---|
| | Novolac polymer | | | |
| | -¹⁾ | (A) | (E) | (F) |
| | | WVTR BEFORE RETORT (%w/year) | | |
| Polyketone | 7.8 | | | |
| 1% novolac | | 6.4 | 7.2 | 7.5 |
| 2% novolac | | 5.5 | 6.6 | 7.7 |
| 5% novolac | | 4.0 | 5.5 | 7.2 |
| 10% novolac | | 2.5 | 4.5 | 7.1 |
| | | | | |

| | | WVTR AFTER RETORT (%w/year) | | |
|---|---|---|---|---|
| Polyketone | 10.8 | | | |
| 1% novolac | | 8.8 | 9.4 | 10.2 |
| 2% novolac | | 7.5 | 8.6 | 10.4 |
| 5% novolac | | 5.2 | 7.2 | 9.6 |
| 10% novolac | | 3.2 | 6.7 | 9.3 |

| | | | | |
|---|---|---|---|---|
| 1) for comparison | | | | |

Table 5 demonstrates that the phenol-based novolac (A) is very effective with regard to reducing the rate of water transport through the container. A significant reduction in transport rate in comparison to the control is observed with only 1 wt% added novolac polymer. At 10% novolac the rate is reduced by a factor greater than three. The butylphenol-based novolac polymer is somewhat less efficient. At 10% modifier, the transport rate is about 60% that of the control. The nonylphenol novolac provided only a marginal improvement in the water transport rate.

In all cases, subjecting the containers to a retort cycle causes the rate of water loss to increase. This in an effect known as "retort shock". The blends are more effective at reducing water transport after retort.

### Example 5

A polyketone polymer (melting point 220 °C; LVN 1.3 dl/g, measured in m-cresol at 60 °C) was blended with two different novolac polymers, (A) and (G), at levels of 5 to 15 wt%. The blends were prepared using the procedures of Example 2 and cups were fabricated and tested using the procedures of Example 3. The results are shown in Table 6.

**Table 6**

| Water vapour transmission rate (WVTR) of polyketone/novolac blends. | | | |
|---|---|---|---|
| Composition PK/NOV, %w | Novolac type | WVTR (before retort) %/year | WVTR (after retort) %/year |
| 100/0 | - | 7.10 | 9.65 |
| 95/5 | (G) | 4.29 | 6.13 |
| 90/10 | (G) | 3.21 | 4.12 |
| 85/15 | (G) | 2.65 | 3.39 |
| 90/10 | (A) | 3.08 | 4.06 |

The data in Table 6 provide further confirmation that the rate of weight loss through water permeation is greatly diminished by virtue of blending the polyketone with minor amounts of novolac resin.

The containers could be moulded without difficulty, had a good appearance and maintained good mechanical integrity. Room temperature impact resistance of polyketone polymer/novolac blends was measured on the injection moulded cups (0.69 mm) (0.027 inch) thick. The cups were rigidly fixed in a jig such that the falling dart penetrated the bottom centre of the cup. A weight of 2,83 kg (6.23 pounds) was dropped freely (no pneumatic assistance) from 0.91 m (3.0 feet) using a tup of 15.9 mm (0.625 inch) diameter. Load as a function of time was measured and converted to load versus displacement by multiplying by the impact velocity. Impact energy was calculated from the integral of the load versus displacement curve. Both total impact energy and maximum load experienced during fracture of the cups are considered to be indicative of the relative impact resistance of the polymer blends.

Table 7 gives the load and energy required to puncture the bottom of the containers. The data show that the addition of novolac actually increases the load and energy required to puncture the containers relative to the pure polyketone control.

**Table 7**

| Falling dart impact properties of polyketone/novolac containers. | | | |
|---|---|---|---|
| Composition PK/NOV, %w | Novolac type | Maximum load N (lbs) | Energy at max. load J (in-lb) |
| 100/0 | - | 400 (89.9) | 0.149 (1.32) |
| 95/5 | (G) | 457 (102.8) | 0.153 (1.35) |
| 90/10 | (G) | 552 (124.2) | 0.186 (1.65) |
| 85/15 | (G) | 609 (137.0) | 0.210 (1.86) |
| 90/10 | (A) | 499 (112.1) | 0.160 (1.42) |

The combined data in Tables 6 and 7 demonstrate that the addition of novolac polymer in relatively low amounts provides a container having improved water barrier (by a factor of 3-4) with undiminished processing characteristics and mechanical properties.

Pieces of the moulded cups were immersed in distilled water at room temperature. Table 8 shows the weight changes which the various materials experienced as a result of water absorption. Table 8 demonstrates that the blends absorb less water than the neat polyketone control. This is surprising since novolacs are known to be hydrophilic, absorbing in the uncrosslinked state 10% or more of their weight in water. This unexpected observation of reduced water absorption in the present blends is useful in itself and is related to the blends' reduced rate of water transport.

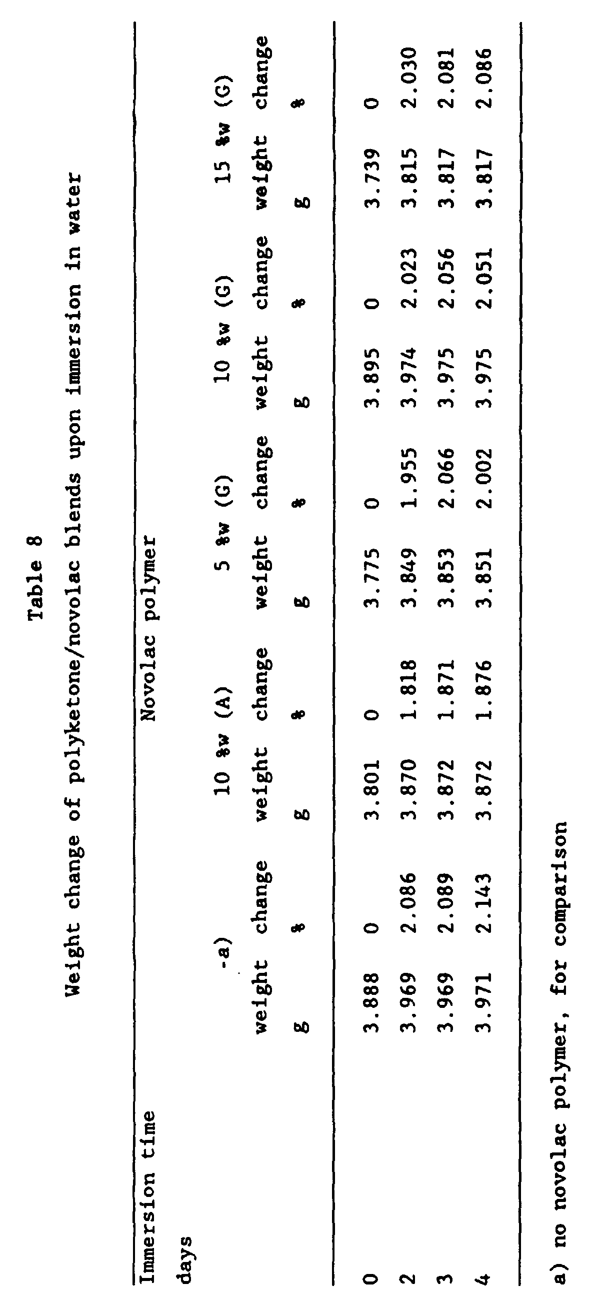

## Claims

1. A composition comprising a blend of a linear alternating polymer of carbon monoxide with at least one ethylenically unsaturated compound and a phenol-based novolac polymer of which the phenyl groups are optionally substituted with an alkyl group having up to 8 carbon atoms, which novolac polymer is present in an amount within the range of from 1 to 30 weight percent, based on the weight of the blend.

2. A composition as claimed in claim 1, wherein the alkyl group has up to 6 carbon atoms.

3. A composition as claimed in claim 1 or 2, wherein the phenol-based novolac polymer is selected from the group consisting of phenol-formaldehyde polymer, cresol-formaldehyde polymer, resorcinol-formaldehyde polymer and p-butylphenol-formaldehyde polymer.

4. A composition as claimed in any one of claims 1-3 wherein the novolac polymer is present in an amount within the range of from 1 to 10 weight percent, based on the weight of the blend.

5. A composition as claimed in any of claims 1-4 wherein the linear alternating polymer is represented by the repeating formula
-[-CO-(-CH₂-CH₂-)-]ₓ- [-CO-(-G-)-]_{y}-
wherein G is a moiety of an ethylenically unsaturated hydrocarbon of at least 3 carbon atoms polymerized through the ethylenic unsaturation and the ratio of y:x is less than 0.5.

6. A composition as claimed in claim 5 wherein, in the linear alternating polymer, G is a moiety of propylene and the ratio of y:x is from 0.01 to 0.1.

7. A composition as claimed in claim 5 wherein, in the linear alternating polymer, y is zero.

8. A composition as claimed in any of claims 1-7, wherein the linear alternating polymer has a melting point from 210 °C to 270 °C and a limiting viscosity number, measured in m-cresol at 60 °C, from 0.8 dl/g to 4 dl/g.

## Patentansprüche

1. Zusammensetzung, enthaltend einen Blend aus einem linearen alternierenden Polymer aus Kohlenmonoxid und mindestens einer ethylenisch ungesättigten Verbindung und einem auf Phenol basierenden Novolak-Polymer, dessen Phenylgruppen gegebenenfalls mit einer Alkylgruppe mit bis zu 8 Kohlenstoffatomen substituiert sind, wobei das Novolak-Polymer in einer Menge im Bereich von 1 bis 30 Gewichtsprozent, bezogen auf das Gewicht des Blends, vorliegt.

2. Zusammensetzung nach Anspruch 1, wobei die Alkylgruppe bis zu 6 Kohlenstoffatome aufweist.

3. Zusammensetzung nach Anspruch 1 oder 2, wobei das auf Phenol basierende Novolak-Polymer aus der Gruppe bestehend aus Phenol-Formaldehyd-Polymer, Kresol-Formaldehyd-Polymer, Resorcin-Formaldehyd-Polymer und p-Butylphenol-Formaldehyd-Polymer ausgewählt ist.

4. Zusammensetzung nach einem der Ansprüche 1-3, wobei das Novolak-Polymer in einer Menge im Bereich von 1 bis 10 Gewichtsprozent, bezogen auf das Gewicht des Blends, vorliegt.

5. Zusammensetzung nach einem der Ansprüche 1-4, wobei das lineare alternierende Polymer durch die wiederkehrende Formeleinheit
-[-CO-(-CH₂-CH₂-)-]ₓ-[-CO-(-G-)-]_{y}-
worin G eine über die ethylenische Ungesättigtheit polymerisierte Baugruppe eines ethylenisch ungesättigten Kohlenwasserstoffs mit mindestens 3 Kohlenstoffatomen darstellt und das Verhältnis y:x weniger als 0,5 beträgt, dargestellt wird.

6. Zusammensetzung nach Anspruch 5, wobei in dem linearen alternierenden Polymer G eine Propylenbaugruppe darstellt und das Verhältnis y:x 0,01 bis 0,1 beträgt.

7. Zusammensetzung nach Anspruch 5, wobei in dem linearen alternierenden Polymer y gleich null ist.

8. Zusammensetzung nach einem der Ansprüche 1-7, wobei das lineare alternierende Polymer einen Schmelzpunkt von 210°C bis 270°C und eine Grenzviskositätszahl, gemessen in m-Kresol bei 60°C, von 0,8 dl/g bis 4 dl/g aufweist.

## Revendications

1. Composition comprenant un alliage d'un polymère alterné linéaire de monoxyde de carbone avec au moins un composé éthyléniquement insaturé et d'un polymère novolaque à base de phénol dont les groupes phényle sont éventuellement substitués par un groupe alkyle ayant jusqu'à 8 atomes de carbone, lequel polymère novolaque est présent en une quantité dans le domaine de 1 à 30 pour cent en poids, sur la base du poids de l'alliage.

2. Composition selon la revendication 1, dans laquelle le groupe alkyle a jusqu'à 6 atomes de carbone.

3. Composition selon la revendication 1 ou 2, dans laquelle le polymère novolaque à base de phénol est choisi parmi le groupe constitué d'un polymère phénolformaldéhyde, d'un polymère crésol-formaldéhyde, d'un polymère résorcinol-formaldéhyde et d'un polymère p-butylphénol-formaldéhyde.

4. Composition selon l'une quelconque des revendications 1 à 3, dans laquelle le polymère novolaque est présent en une quantité dans le domaine de 1 à 10 pour cent en poids, sur la base du poids de l'alliage.

5. Composition selon l'une quelconque des revendications 1 à 4, dans laquelle le polymère alterné linéaire est représenté par la formule récurrente
-[-CO-(-CH₂-CH₂-)-]ₓ-[-CO-(-G-)-]_{y}-
dans laquelle G est un groupement d'un hydrocarbure éthyléniquement insaturé d'au moins 3 atomes de carbone polymérisé par l'intermédiaire de l'insaturation éthylénique et le rapport de y:x est inférieur à 0,5.

6. Composition selon la revendication 5, dans laquelle dans le polymère alterné linéaire, G est un groupement de propylène et le rapport de y:x est de 0,01 à 0,1.

7. Composition selon la revendication 5, dans laquelle dans le polymère alterné linéaire, y vaut zéro.

8. Composition selon l'une quelconque des revendications 1-7, dans laquelle le polymère alterné linéaire a un point de fusion de 210°C à 270°C et une viscosité intrinsèque, mesurée dans le m-crésol à 60°C, de 0,8 dl/g à 4 dl/g.
